(19) Europäisches Patentamt
European Patent Office
Office européen des brevets

(11) **EP 3 767 556 B1**

(12) **EUROPEAN PATENT SPECIFICATION**

(45) Date of publication and mention
of the grant of the patent:
**01.03.2023 Bulletin 2023/09**

(21) Application number: **19877630.4**

(22) Date of filing: **31.10.2019**

(51) International Patent Classification (IPC):
*G06N 20/00* (2019.01)   *E03F 1/00* (2006.01)
*G01F 1/66* (2006.01)   *G06N 3/08* (2006.01)
*G01F 15/063* (2022.01)

(52) Cooperative Patent Classification (CPC):
**G06N 3/084; E03F 1/00; G01F 1/666; G06N 3/08; G06N 20/00;** G01F 15/063

(86) International application number:
**PCT/JP2019/042856**

(87) International publication number:
**WO 2020/090991 (07.05.2020 Gazette 2020/19)**

(54) **DEVICE, METHOD, PROGRAM, AND SYSTEM FOR DETECTING UNIDENTIFIED WATER**

VORRICHTUNG, VERFAHREN, PROGRAMM UND SYSTEM ZUR DETEKTION VON NICHT IDENTIFIZIERTEM WASSER

DISPOSITIF, PROCÉDÉ, PROGRAMME, ET SYSTÈME DE DÉTECTION D'EAU NON IDENTIFIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2018 JP 2018207773**

(43) Date of publication of application:
**20.01.2021 Bulletin 2021/03**

(73) Proprietor: **CTI Engineering Co. Ltd.
Tokyo 103-0007 (JP)**

(72) Inventors:
• **YE, Jiaxing
Tsukuba-shi Ibaraki 305-8560 (JP)**
• **YOSHIDA, Ken
Tokyo 103-0007 (JP)**

(74) Representative: **Dennemeyer & Associates S.A.
Postfach 70 04 25
81304 München (DE)**

(56) References cited:
JP-A- S6 134 461       JP-A- H08 101 710
JP-A- 2000 087 433     JP-A- 2002 285 634
JP-A- 2007 531 868     JP-A- 2014 182 092
US-A1- 2002 170 350    US-A1- 2012 185 418
US-A1- 2017 089 047

• **Anonymous: "Needs survey attached proposal theme concerning themes such as breakthrough by dynamic approached in sewage high technology project in 2019", Japan institute of wastewater engineering and technology , 31 May 2018 (2018-05-31), pages 1-3, XP009524097, Retrieved from the Internet: URL:https://www.jiwet.or.jp/wp/wp-content/ uploads/2018/06/besshi-bunruil.pdf [retrieved on 2019-07]**

**Description**

Technical Field

The present invention relates to a technique for detecting unknown water using a machine learning model.

Background Art

A separate sewer system is currently in the mainstream of sewage treatment, in which a wastewater pipeline for wastewater discharged from houses, factories, and the like and a rainwater pipeline for rainwater are separately installed. The wastewater discharged into the wastewater pipeline is treated in a sewage treatment plant and is let out into a river or the like after treatment. Meanwhile, the rainwater that has flowed into the rainwater pipeline is directly let out into a river or the like.

The amount of wastewater flowing into the sewage treatment plant is regarded as a wastewater treatment amount for treatment at the sewage treatment plant. In principle, a sewerage fee corresponding to water supply usage is charged for the wastewater treatment amount (revenue water amount). However, there is actually a large difference between the wastewater treatment amount and the revenue water amount. The amount of water corresponding to this difference is called unknown water. Typically, the unknown water is rainwater, groundwater, and/or the like that somehow flow into the wastewater pipeline. The wastewater having flowed into the wastewater pipeline has to be treated in the sewage treatment plant. Thus, the unknown water places stress on management of sewage treatment business. For example, the 2011 statistics indicate that the unknown water is 17.1% of the annual total amount of treated water.

See, for example, Japanese Patent Application Laid-Open No. 2011-080347. Patent document JP 2002 285634 A discloses rainwater inflow prediction device that predicts the inflow amount and water level of rainwater flowing into a sewage pumping station, a sewage pumping station, a sewage treatment plant, etc. at the time of rainfall. It is based on information from water level gauges installed in the sewer trunk but flowmeters are also considered, yet details for the machine learning process are given only for water level gauges.

Summary of Invention

Technical Problem

As is understood, the unknown water arising from rainwater and/or groundwater often occurs due to the inflow of rainwater during rainfall. For this reason, conventionally, the occurrence of unknown water has been forecast by using flowmeters installed at multiple sewer pipe installation locations for detecting where the flow rate in the sewer pipe increases during rainfall or after rainfall.

However, the installation of each of the flowmeters is costly in terms of not only the flowmeter itself, but also the work cost and labor cost for installation and/or the like, and therefore, a technique for detecting unknown water which can be implemented at lower cost has been required.

An object of the present invention considering the above-mentioned problem is to provide a technique for achieving detection of unknown water without the need for a flowmeter.

Solution to Problem

One aspect of the present invention relates to an unknown-water detection apparatus that, in order to solve the above problem, includes a processor, a memory, and a feature amount extraction section that extracts, from acoustic data including a water flowing sound, an acoustic feature amount pattern indicating a temporal change in an acoustic feature amount; and an unknown-water prediction section that predicts presence or absence of unknown water from an acoustic feature amount pattern of target acoustic data for prediction by utilizing a machine learning model that learned an acoustic feature amount pattern extracted from data including one or both of acoustic data including a water flowing sound during no-rainfall time and acoustic data of a water flowing sound under a condition different from the no-rainfall time, in which the acoustic feature amount pattern indicates a temporal change in the acoustic feature amount with respect to day of week and time slot, and wherein the acoustic data under the condition different from the no-rainfall time is at least one of acoustic data during rainfall time, acoustic data of a water flowing sound when another flowing water from outside is introduced into flowing water during no-rainfall time, and acoustic data of a water flowing sound due to groundwater or storm surge.

Advantageous Effects of Invention

According to the present invention, detection of unknown water can be achieved without the need for a flowmeter.

Brief Description of Drawings

FIG. 1 illustrates an outline of an unknown-water detection apparatus according to one example of the present invention;
FIG. 2 is a block diagram illustrating a hardware configuration of the unknown-water detection apparatus according to one example of the present invention;
FIG. 3 is a block diagram illustrating a functional configuration of the unknown-water detection apparatus according to one example of the present invention;
FIG. 4 illustrates an acoustic feature amount pattern in a matrix format according to one example of the present invention;
FIG. 5 is a flowchart illustrating an unknown-water detection process according to one example of the present invention;
FIG. 6A schematically illustrates an acoustic feature amount pattern according to one example of the present invention;
FIG. 6B schematically illustrates an acoustic feature amount pattern according to one example of the present invention;
FIGS. 7A and 7B illustrate a specific example of a temporal change in water usage and acoustic feature amount in one day;
FIG. 8 illustrates a prediction result on the presence or absence of unknown water according to one example of the present invention;
FIG. 9 schematically illustrates an unknown-water detection model using a subspace method according to one example of the present invention;
FIG. 10 is a flowchart illustrating an unknown-water prediction process using the subspace method according to one example of the present invention;
FIG. 11 is a flowchart illustrating a learning process for an unknown-water detection model implemented using a neural network according to one example of the present invention; and
FIG. 12 illustrates an unknown-water prediction result by the unknown-water detection apparatus according to one example of the present invention.

Description of Embodiments

An embodiment of the present invention will be described below with reference to the drawings.

[Outline of Present Invention]

In the below-mentioned example, an unknown-water detection apparatus is disclosed that detects unknown water from acoustic data including a water flowing sound in a sewer pipe. The example described below is outlined as follows: when the unknown-water detection apparatus obtains acoustic data including a water flowing sound in a sewer pipe collected by a sound collection apparatus installed down in a manhole, the unknown-water detection apparatus extracts an acoustic feature amount pattern indicating a temporal change in an acoustic feature amount from the obtained acoustic data, and predicts the presence or absence of unknown water from the extracted acoustic feature amount pattern by utilizing a learned unknown-water detection model.

Here, the unknown-water detection model may be a machine learning model that learned an acoustic feature amount pattern extracted from data including one or both of acoustic data including a water flowing sound during no-rainfall time and acoustic data of a water flowing sound under a condition different from the no-rainfall time. For example, the unknown-water detection model may be a machine learning model that uses a subspace to characterize the acoustic feature amount pattern of the acoustic data including the water flowing sound during the no-rainfall time (i.e., an acoustic feature amount pattern of normally used water not including unknown water). Alternatively, the unknown-water detection model may be a neural network that learned the acoustic feature amount pattern extracted from the acoustic data during the no-rainfall time that does not include the water flowing sound of unknown water, and from the acoustic data obtained under the condition different from the no-rainfall time that includes the water flowing sound of unknown water.

Thus, the unknown-water detection apparatus can detect the presence or absence of unknown water based on the acoustic data obtained by utilizing a sound collection apparatus such as a commercially available voice recorder, so that it becomes possible to perform unknown-water detection at lower cost than in unknown-water detection using the conventional flowmeter.

[Unknown-Water Detection Apparatus]

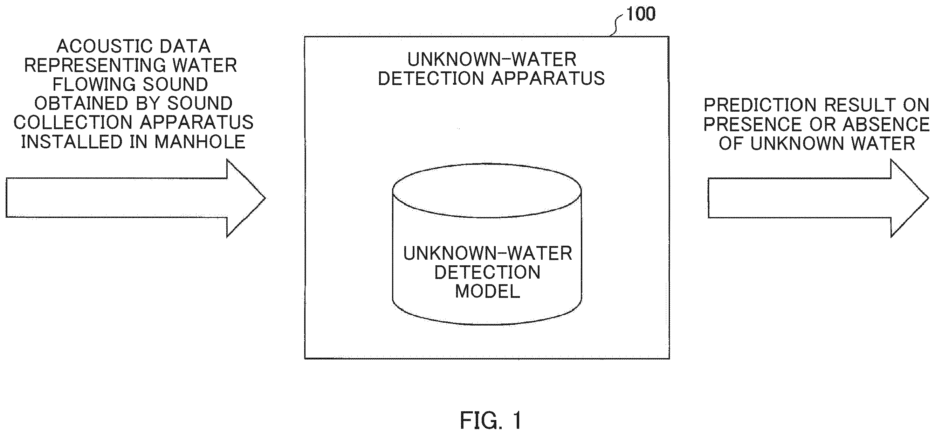

To begin with, the unknown-water detection apparatus according to one example of the present invention will be described with reference to FIGS. 1 to 8. FIG. 1 schematically illustrates the unknown-water detection apparatus according to one example of the present invention.

As illustrated in FIG. 1, when unknown-water detection apparatus 100 obtains acoustic data including a water flowing sound in a sewer pipe obtained by a sound collection apparatus such as a voice recorder installed in a manhole, the unknown-water detection apparatus utilizes an unknown-water detection model implemented as a machine learning model to predict the presence or absence of unknown water from the obtained acoustic data.

For example, the sound collection apparatus may be a commercially available voice recorder or the like. Sound collection apparatuses are installed down in a plurality of manholes in an area, and record, as acoustic data in a predetermined format or acoustic waveform, sounds (water flowing sounds) of water flowing through sewer pipes down in the manholes. The acoustic data recorded in each of the sound collection apparatuses may be appropriately collected by hands or the like, or may also be collected via a communication network when the sound collection apparatus is provided with a communication function. Unknown-water detection apparatus 100 preprocesses the obtained acoustic data and segments the obtained acoustic data into segments of data of a predetermined period of time (e.g., 10 minutes) to generate an acoustic feature amount pattern indicating a temporal change of time-serialized acoustic data (e.g., in one day, one week, or the like). Unknown-water detection apparatus 100 inputs the generated acoustic feature amount pattern into the learned unknown-water detection model, to obtain a prediction result indicating the presence or absence of unknown water from the unknown-water detection model.

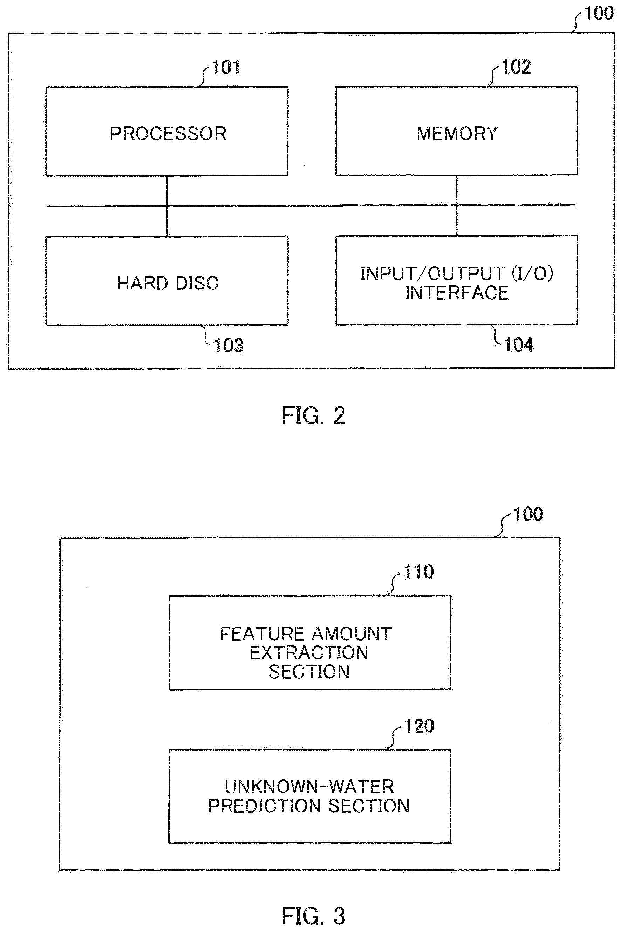

Here, unknown-water detection apparatus 100 may have a hardware configuration including processor 101 such as a Central Processing Unit (CPU), a Graphics Processing Unit (GPU), or the like, memory 102 such as a Random Access Memory (RAM), a flash memory, or the like, hard disk 103, and input/output (I/O) interface 104 as illustrated in FIG. 2, for example.

Processor 101 executes various processes of unknown-water detection apparatus 100, which will be described in detail below.

Memory 102 stores therein various data and programs for unknown-water detection apparatus 100 together with a program for implementing the unknown-water detection model, and functions as a working memory especially for working data, a program being executed, and the like. Specifically, memory 102 stores therein data and programs loaded from hard disk 103 and functions as the working memory during program execution by processor 101.

Hard disk 103 stores therein the various data and programs for unknown-water detection apparatus 100 together with the program for implementing the unknown-water detection model.

I/O interface 104 is an interface for inputting and outputting data into and from an external apparatus, and is a device for inputting and outputting data of a Universal Serial Bus (USB), a communication circuit, a keyboard, a mouse, a display, and the like, for example.

However, the hardware configuration of unknown-water detection apparatus 100 according to the present disclosure is not limited to the above-described configuration, and the unknown-water detection apparatus may have any other suitable hardware configuration. For example, a part or all of the unknown-water detection process of unknown-water detection apparatus 100 described above may be implemented by a processing circuit or an electronic circuit wired to implement the unknown-water detection process.

FIG. 3 is a block diagram illustrating a functional configuration of unknown-water detection apparatus 100 according to one example of the present invention. As illustrated in FIG. 3, unknown-water detection apparatus 100 includes feature amount extraction section 110 and unknown-water prediction section 120.

Feature amount extraction section 110 extracts, from the acoustic data including the water flowing sound, the acoustic feature amount pattern indicating a temporal change in an acoustic feature amount.

Specifically, feature amount extraction section 110 first performs preprocessing and segmentation on the acoustic data indicating an acoustic waveform representing the water flowing sound in a sewer pipe. When obtaining the acoustic data, feature amount extraction section 110 first discards, when the acoustic data includes any data loss caused by a malfunction of the sound collection apparatus or the like, a zero value or non-numerical data in the lost part. Then, feature amount extraction section 110 segments the obtained continuous acoustic waveform into segments at predetermined time intervals in order to facilitate subsequent data processing. The segmentation may divide the acoustic waveform data into data pieces having 10-minute durations, and acoustic waveform data pieces of adjacent segments may have an overlap of five minutes. In this case, the subsequent data processing is executed on a segment-by-segment basis.

Further, in order to remove or reduce an interference signal indicating an ambient noise (e.g., vehicle horn, noise generated by a tire passing over a manhole cover, or the like) that gets mixed in the acoustic data during collection of the acoustic data, feature amount extraction section 110 applies a high-pass filter to the acoustic data to remove a low-frequency noise. The acoustic data after the application of the high-pass filter is expressed as x = [x₁, ..., x_N]. In this expression, "N" denotes the number of acoustic data pieces in one segment.

Thereafter, feature amount extraction section 110 removes the noise by utilizing a mean and a variance of the acoustic data expressed by following Expression 1 and the Gaussian model:

[1]

$$\mu = \frac{1}{N}\sum_{i=1}^{N} x_i \,, \quad \delta^2 = \frac{1}{N}\sum_{i=1}^{N}(x_i - \mu)^2$$

... (Expression 1).

Specifically, when acoustic data string x in a segment is given, feature amount extraction section 110 computes, in accordance with following Expression 2, probability $p(x_i)$ of occurrence of acoustic data $x_i$:

[2]

$$p(x_i) = \frac{1}{\sqrt{2\pi}\delta}\exp(-\frac{(x_i - \mu)^2}{2\delta^2})$$

... (Expression 2).

When $p(x_i) < \varepsilon$ (where $\varepsilon$ is a predetermined threshold for noise removal), inputted segment $x_i$ is determined as an anomalous state or anomaly and is deleted from target acoustic data to be processed.

Next, feature amount extraction section 110 performs feature amount extraction on the segments obtained by the segmentation after the preprocessing. Specifically, feature amount extraction section 110 extracts, from the segments, a temporal feature amount or statistic including mean, median, standard deviation, maximum value/minimum value, kurtosis, skewness, zero crossing rate, energy, energetic entropy, and the like. The extracted feature amount vector is expressed by following Expression 3:

[3]

$$f_{\text{time}} \in \mathcal{R}^{d_1 \times 1}$$

... (Expression 3).

In this expression, "$d_1$" denotes the total number of feature amounts and "×1" denotes a one-dimensional vector.

Feature amount extraction section 110 also extracts, from the segments, a time-frequency feature amount indicating a local variation pattern of the water flowing sound. The time-frequency feature amount includes mel-frequency cepstral coefficient (MFCC), gammatone cepstral coefficient (GTCC), mel-scale spectrogram, and the like.

The extracted feature amount vector is expressed by following Expression 4:

[4]

$$f_{\text{tf}} \in \mathcal{R}^{d_2 \times 1}$$

$$\dots \text{(Expression 4)}.$$

In this expression, "$d_2$" denotes the total number of the above feature amounts and "$\times 1$" denotes a one-dimensional vector.

Feature amount extraction section 110 further extracts, from the segments, a feature amount for explaining the complexity of the acoustic pattern, which includes spectral center, spectral spread, spectral entropy, spectral flux, spectral roll-off, and the like. The extracted feature amount vector is expressed by following Expression 5:

[5]

$$f_{\text{STAT}} \in \mathcal{R}^{d_3 \times 1}$$

$$\dots \text{(Expression 5)}.$$

In this expression, "$d_3$" denotes the total number of the above feature amounts and "$\times 1$" denotes a one-dimensional vector.

Feature amount extraction section 110 can obtain a feature amount vector of each of the segments expressed by following Expression 6 by concatenating the respective feature amount vectors obtained by the above-described feature amount extraction:

[6]

$$f = [f'_{\text{time}}, f'_{\text{tf}}, f'_{\text{STAT}}]' \in \mathcal{R}^{D \times 1}$$

$$\dots \text{(Expression 6)}.$$

In this expression, $D = d_1 + d_2 + d_3$.

Next, feature amount extraction section 110 further provides the obtained feature amount vectors with subscripts regarding date and time and rearranges the feature amount vectors. As described above, feature amount extraction section 110 obtains, for each of the segmented acoustic data pieces, the feature amount vector expressed by following Expression 7, whose elements are composed of D feature amounts:

[7]

$$f_1, \dots, f_L \in \mathcal{R}^{D \times 1}$$

$$\dots \text{(Expression 7)}.$$

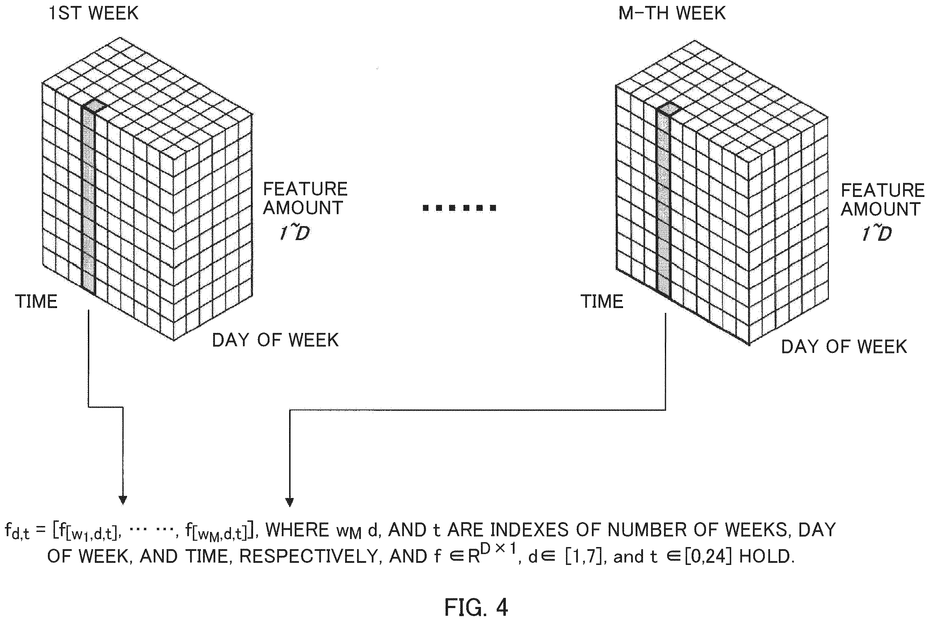

In the above expression, the feature amount vectors corresponding to the respective segments are expressed with subscripts 1 to L being given in chronological order. For example, in order to detect unknown water, an anomaly can be searched for from the below-described two aspects. In respect of the first aspect, the acoustic pattern of the sound of flowing water including the unknown water exhibits an anomaly in terms of a short-time spectral distribution, as compared to the acoustic pattern of the normally used water. In respect of the second aspect, the time of occurrence of the unknown water is irregular. For example, the unknown water occurs at midnight; such an irregularity is hardly observed in the acoustic pattern of the normally used water. In order to effectively search for the anomaly from these two aspects, the obtained feature amounts are rearranged in a matrix format as illustrated in FIG. 4 in accordance with the above-mentioned subscripts. This makes it possible to emphasize time dependence of D acoustic feature amounts. The rearranged feature amounts are represented as $f_{d,t}$.

However, the format expressing the acoustic feature amount pattern generated by feature amount extraction section 110 is not limited to such a matrix format, and may also be chronological data of any other appropriate acoustic feature amounts that can express the acoustic feature amount pattern.

Unknown-water prediction section 120 predicts the presence or absence of the unknown water from the acoustic feature amount pattern of target acoustic data for prediction by utilizing a machine learning model that learned the acoustic feature amount pattern extracted from the data including one or both of the acoustic data including the water flowing sound during no-rainfall time and the acoustic data of the water flowing sound under a condition different from the no-rainfall time. Specifically, unknown-water prediction section 120 has a learned unknown-water detection model into which the acoustic feature amount pattern is inputted and that outputs a prediction result on the presence or absence of the unknown water, and determines, by utilizing the learned unknown-water detection model, whether the target acoustic data for prediction indicates the presence of the unknown water, based on the acoustic feature amount pattern of the target acoustic data for prediction generated by feature amount extraction section 110.

Here, the acoustic data under the condition different from the no-rainfall time is at least one of acoustic data obtained during rainfall time, acoustic data of a water flowing sound when another flowing water from outside is introduced into flowing water during no-rainfall time, and acoustic data of a water flowing sound due to groundwater or storm surge. As described above, it is known that the unknown water typically arises from rainwater during rainfall or groundwater, and the acoustic data during the rainfall time can be used as the acoustic data including the water flowing sound of unknown water. Alternatively, it is possible to obtain the acoustic data including the water flowing sound of unknown water by artificially adding flowing water to the flowing water flowing through a sewer pipe.

As will be described in detail below, the unknown-water detection model may utilize a subspace as determined in accordance with a subspace method, which indicates the acoustic feature amount pattern of acoustic data including the water flowing sound during no-rainfall time that does not include the water flowing sound of unknown water. Alternatively, the unknown-water detection model may be based on a neural network that distinguishes between the acoustic feature amount pattern of acoustic data including the sound of flowing water including unknown water under a condition different from the no-rainfall time, on the one hand, and the acoustic feature amount pattern of acoustic data including the water flowing sound during the no-rainfall time that does not include the water flowing sound of unknown water, on the other hand.

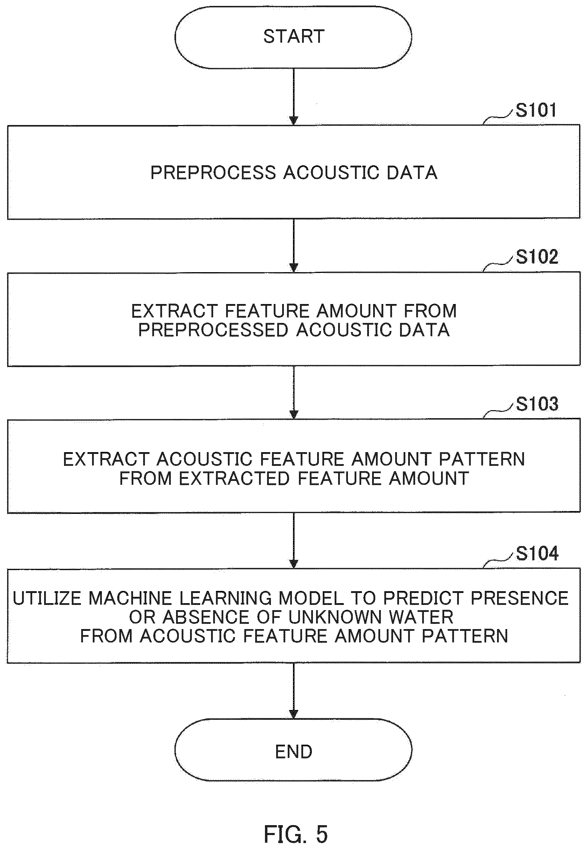

FIG. 5 is a flowchart illustrating an unknown-water detection process according to one example of the present invention. The unknown-water detection process is executed by unknown-water detection apparatus 100, more specifically, by processor 101 of unknown-water detection apparatus 100.

As illustrated in FIG. 5, at step S101, unknown-water detection apparatus 100 preprocesses the acoustic data. Specifically, as described above, unknown-water detection apparatus 100 performs various preprocessing and segmentation, such as removal of noise included in the obtained acoustic data and segmentation of the acoustic data into data pieces of a predetermined time duration.

At step S102, unknown-water detection apparatus 100 extracts a feature amount(s) from the preprocessed acoustic data. Specifically, as described above, the feature amount to be extracted may be a temporal feature amount or statistic (e.g., mean, median, standard deviation, maximum value/minimum value, kurtosis, skewness, zero crossing rate, energy, energetic entropy, and the like), mel-frequency cepstral coefficient (MFCC), gammatone cepstral coefficient (GTCC), time-frequency feature amount (e.g., mel-scale spectrogram, or the like), and other feature amounts (e.g., spectral center, spectral spread, spectral entropy, spectral flux, spectral roll-off, and the like), but are not limited thereto.

At step S103, unknown-water detection apparatus 100 generates the acoustic feature amount pattern from the extracted feature amount(s). Specifically, as described above, unknown-water detection apparatus 100 may generate any suitable chronological data of the acoustic feature amounts (e.g., acoustic feature amount pattern in a matrix format as illustrated in FIG. 4) that can express the acoustic feature amount pattern of each of the various acoustic feature amounts.

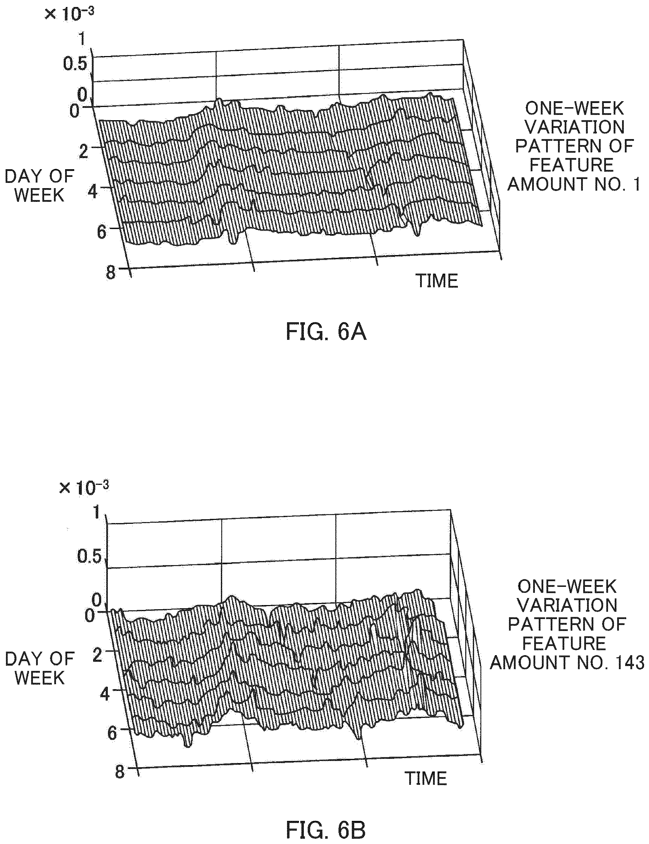

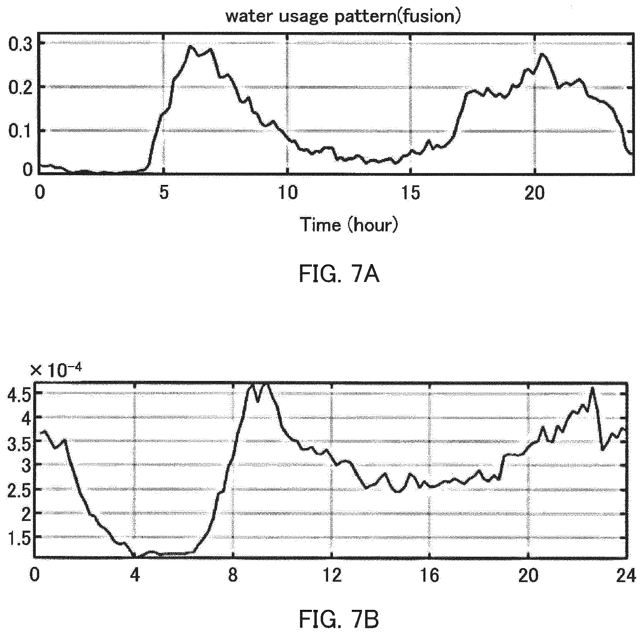

For example, as illustrated in FIGS. 6A and 6B, unknown-water detection apparatus 100 may generate a one-week acoustic feature amount pattern for each of the feature amounts extracted at step S102 (143 types of feature amounts are extracted in the illustrated specific example). Here, the one-day acoustic feature amount patterns tend to have substantially constant patterns. For example, a one-day water supply usage has a pattern as illustrated in FIG. 7A. The water supply is hardly used at midnight, and the water supply usage tends to increase in the time slots before and after breakfast and dinner when a family is mainly active at home. It will be understood that the acoustic feature amount pattern of the water flowing sound also has generally the same pattern correspondingly although there is a time lag between the time of water supply usage and the time after drainage to a sewer pipe as illustrated in FIG. 7B. When unknown water occurs during rainfall or the like, a deviation from the illustrated acoustic feature amount pattern arises. It is thus possible to detect the unknown water by identifying such a deviated acoustic feature amount pattern.

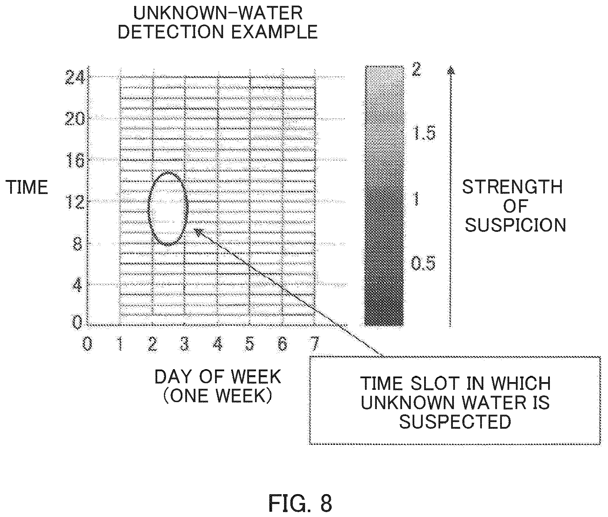

At step S104, unknown-water detection apparatus 100 utilizes a learned machine learning model to predict the presence or absence of unknown water from the acoustic feature amount pattern. More specifically, as described above, unknown-water detection apparatus 100 has the learned unknown-water detection model into which the acoustic feature amount pattern is inputted and that outputs a prediction result on the presence or absence of unknown water, and determines, by utilizing the learned unknown-water detection model, whether target acoustic data for prediction indicates the existence of unknown water, based on the generated acoustic feature amount pattern. For example, the prediction result on the presence or absence of unknown water may be obtained in a data format as illustrated in FIG. 8. That is, a time slot in which unknown water is suspected (e.g., a time slot in which there is a significant deviation from a normal acoustic feature amount pattern not including the water flowing sound of unknown water) may be identified, and the degree of possibility of occurrence of unknown water may be indicated in accordance with the degree of deviation as illustrated in the figure.

[Unknown-Water Detection Model Based on Subspace Method]

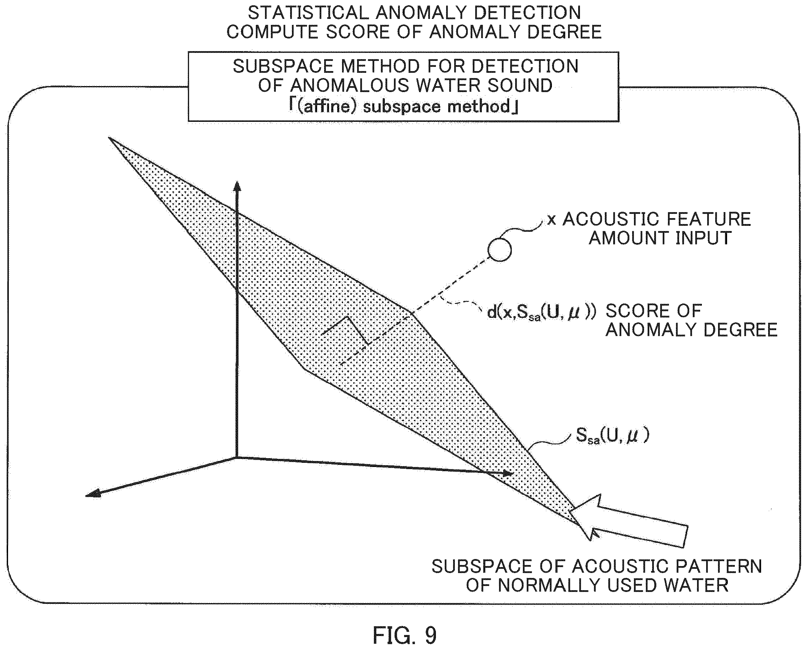

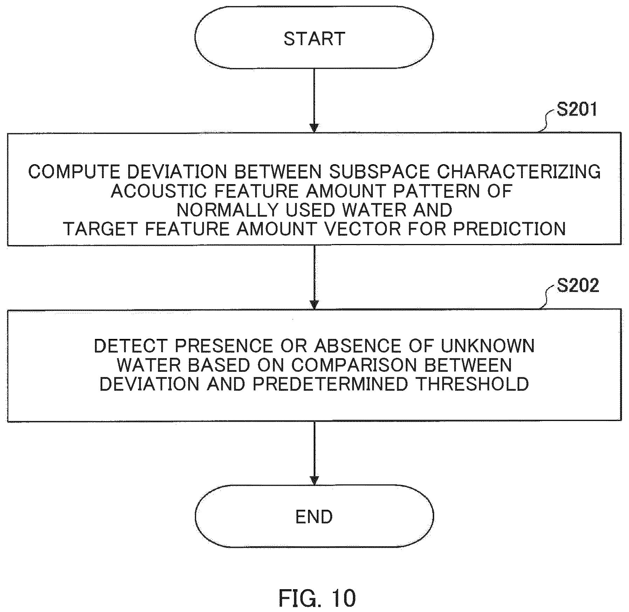

Next, the unknown-water detection model based on the subspace method according to one example of the present invention will be described with reference to FIGS. 9 and 10. In the unknown-water detection model based on the subspace method, unknown-water prediction section 120 utilizes an unknown-water detection model in which a subspace is used to characterize an acoustic feature amount pattern extracted from acoustic data during no-rainfall time that does not include the water flowing sound of unknown water. That is, unknown-water prediction section 120 predicts the presence or absence of unknown water in target acoustic data for prediction, based on a score of anomaly degree that indicates a deviation from the subspace formed by the acoustic feature amount pattern extracted from acoustic data including the water flowing sound during no-rainfall time that does not include the water flowing sound of unknown water.

Specifically, unknown-water prediction section 120 has in advance information about the subspace derived in accordance with the subspace method from the acoustic feature amount pattern extracted from the acoustic data indicating the normally used water during no-rainfall time that does not include the water flowing sound of unknown water, computes a score of anomaly degree that indicates a deviation between an acoustic feature amount extracted from the target acoustic data for prediction and the subspace, and predicts the presence or absence of unknown water in accordance with the computed score of anomaly degree. For example, as illustrated in FIG. 9, unknown-water prediction section 120 may have in advance subspace $S_{sa}(U, \mu)$ indicating the acoustic feature amount pattern of the normally used water, compute distance $d(x, S_{sa}(U, \mu))$ between target acoustic feature amount pattern x for prediction and subspace $S_{sa}(U, \mu)$ as the score of anomaly degree, and determine that the inputted acoustic feature amount pattern includes unknown water when computed distance $d(x, S_{sa}(U, \mu))$ is greater than or equal to a predetermined threshold.

For example, such a subspace may be derived as described below from a training acoustic feature amount pattern extracted from acoustic data including acoustic data during no-rainfall time and acoustic data during rainfall time.

To begin with, the subspace of the acoustic feature amount pattern of normally used water is derived in accordance with the subspace method from the acoustic feature amount pattern indicating the normally used water during no-rainfall time that does not include unknown water. Acoustic feature amount patterns including patterns for no-rainfall time and for rainfall time are divided into the acoustic feature amount pattern for the no-rainfall time and the acoustic feature amount pattern for the rainfall time. Since the unknown water mainly occurs during rainfall time but not during no-rainfall time, the subspace is derived by utilizing the acoustic feature amount pattern for the no-rainfall time.

A D-dimensional feature amount vector extracted from acoustic data during the no-rainfall time is expressed by following Expression 8:

$$f_{i,d,t} \in \mathbb{R}^D (i = 1 \dots, W)$$

$$\dots \text{(Expression 8)}.$$

In this expression, "W" denotes the number of weeks of a data collection period and "d" and "t" denote day of week and time, respectively. Since [d, t] is common, $f_{i,d,t}$ can thus be represented simply by "$f_i$."

A covariance matrix can be computed by following Expression 9, and eigenvalue decomposition (EVD) is performed on the covariance matrix:

$$R_f = \frac{1}{W}\sum_{i=1}^{W}\{f_i f_i^T\}, \ (i = 1\ ...,W) \quad \cdots (1)$$

... (Expression 9).

Two resulting matrices

[10]

$$R_f U = U\Lambda \quad \cdots (2)$$

... (Expression 10)

are composed of eigenvectors expressed by following Expression 11 and Expression 12, in which the eigenvectors are sorted in descending order of eigenvalue $\lambda_i$:

[11]

$$U = [u_1, ..., u_M]$$

... (Expression 11);

[12]

$$\Lambda = \mathrm{diag}(\lambda_1, ..., \lambda_M)$$

... (Expression 12).

The contribution of the k-th eigenvector to each eigenvector can be computed by following Expression 13:

[13]

$$\eta_k = \frac{\sum_1^k \lambda_i}{\sum_1^M \lambda_i} \quad \cdots (3)$$

... (Expression 13).

The first k eigenvectors expressed by following Expression 14 for which the contribution of $\eta_k$ is greater than 0.99 are retained as dominant feature amounts in the acoustic data of the normally used water:

[14]

$$U_k = [u_1, ..., u_k]$$

... (Expression 14).

A subspace of an acoustic feature amount pattern of these dominant feature amounts is denoted by S and its projection operator is expressed as following Expression 15:

[15]

$$P_s = U_k U_k^{\mathrm{T}}$$

... (Expression 15).

The projection operator on an orthogonal complementary space of S is expressed as following Expression 16, and a deviation (similarity) of feature amount vector f from subspace S can be computed as expressed in following Expression 17, in which "r$^2$" is used as the score of anomaly degree that indicates the deviation of feature amount vector f from subspace S:

[16]

$$P_{\perp s} = I_M - P_s$$

... (Expression 16)

[17]

$$r^2 = \|P_{\perp s} \cdot f\| = f^{\mathrm{T}}(I_D - U_k U_k^{\mathrm{T}})f \quad \cdots (4)$$

... (Expression 17).

A feature amount vector extracted from acoustic data during no-rainfall time can be represented as a linear combination of basis vectors of the subspace, and the value of the score of anomaly degree r$^2$ is 0 or a value close to 0. On the other hand, a feature amount vector extracted from acoustic data including the water flowing sound of unknown water is linearly independent of the basis vectors of the subspace, and the value of the score of anomaly degree r$^2$ is significantly different from 0.

By utilizing following Expression 18, it is determined that unknown water is included when r is greater than the value of threshold τ, and it is determined that unknown water is not included when r is less than or equal to the value of threshold τ:

$$\tau = \mathrm{mean}(r_{train}) + 2 * \mathrm{std}(r_{train}), \quad i = 1, \dots, \mathrm{N} \quad \cdots (5)$$

... (Expression 18).

In this expression, "r$_{train}$" denotes a deviation computed from the acoustic feature amount for no-rainfall time.

FIG. 10 is a flowchart illustrating an unknown-water prediction process using the subspace method according to one example of the present invention. In the unknown-water prediction process, the subspace derived based on the subspace method is utilized as the unknown-water detection model at step S104 of FIG. 5.

At step S201, unknown-water detection apparatus 100 computes a deviation between the subspace characterizing the acoustic feature amount pattern of the normally used water derived as described above and a target feature amount vector for prediction.

At step S202, unknown-water detection apparatus 100 detects the presence or absence of unknown water based on comparison between the computed deviation and a predetermined threshold. Specifically, when the computed deviation is greater than the predetermined threshold, unknown-water detection apparatus 100 determines that unknown water exists, and when the computed deviation is less than or equal to the predetermined threshold, unknown-water detection apparatus 100 determines that unknown water does not exist. Here, the threshold may be set, for example, based on the mean and standard deviation of the distribution of the deviations computed from the acoustic feature amounts for no-rainfall time in accordance with Expression 5.

Further, when the computed deviation is greater than the predetermined threshold, unknown-water detection apparatus 100 may also determine the strength of suspicion of unknown water in accordance with the degree of excess. For example, unknown-water detection apparatus 100 may set the strength of suspicion of the unknown water to $\alpha_1$ when the deviation is greater than the threshold and less than or equal to twice the threshold, and set the strength of suspicion of the unknown water to $\alpha_2$ ($> \alpha_1$) when the deviation is greater than twice the threshold and less than or equal to three times the threshold, and so on. The higher the strength of suspicion (i.e., the greater the deviation), the higher the reliability of determination that unknown water is included, and the lower the strength of suspicion (i.e., the less significant the deviation), the lower the reliability of determination that unknown water is included.

Note that, sewer pipes can be roughly classified into a branch sewer pipe disposed in a position where the amount of water is comparatively small and a trunk sewer pipe in which flowing water through the branch sewer pipe gathers. For example, in the branch sewer pipe, even a relatively small amount of inflow of unknown water may change the amount of water and also change the water flowing sound. On the other hand, in the trunk sewer pipe, it may be impossible to discern the change in the amount of water and the water flowing sound unless a large amount of unknown water flows into the pipe. For this reason, the threshold may be adjusted in accordance with the amount of water that normally flows through the sewer pipe. For example, a threshold set for the trunk sewer pipe in which the amount of water is relatively large may be relatively smaller than a threshold set for the branch sewer pipe in which the amount of water is relatively small, such that even a relatively small change in the amount of water is detected as unknown water.

[Unknown-Water Detection Model Based on Neural Network]

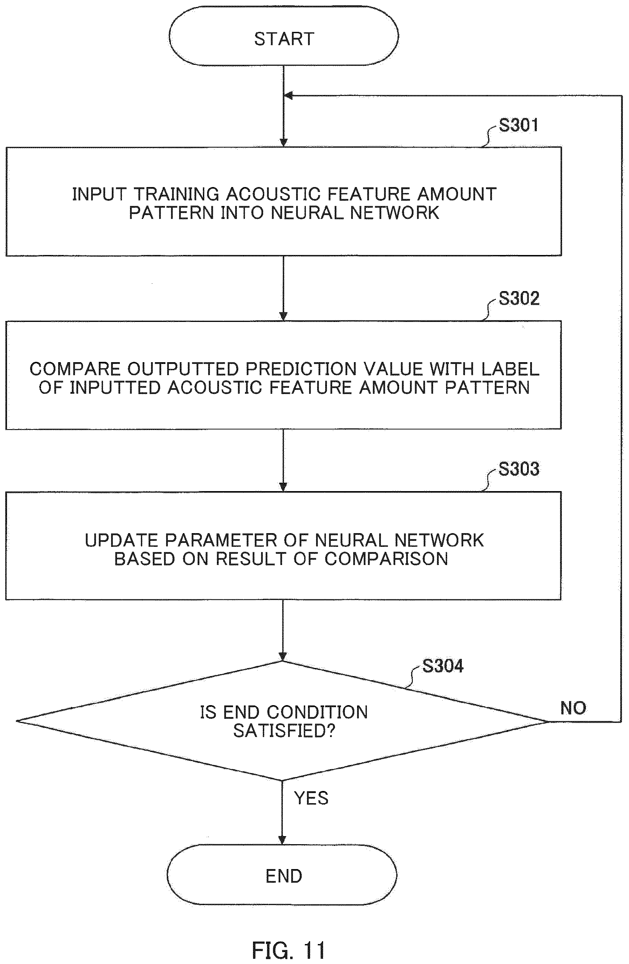

Next, an unknown-water detection model based on a neural network according to one example of the present invention will be described with reference to FIG. 11. As for the unknown-water detection model based on the neural network, unknown-water prediction section 120 has an unknown-water detection model implemented as a neural network that learned acoustic feature amount patterns extracted from data including acoustic data during no-rainfall time that does not include the water flowing sound of unknown water and acoustic data obtained under a condition different from the no-rainfall time that includes the water flowing sound of unknown water, and inputs an acoustic feature amount pattern of target acoustic data for prediction into the unknown-water detection model to predict the presence or absence of unknown water as an output from the unknown-water detection model. Specifically, the unknown-water detection model is a neural network that learned by utilizing, as training data, an acoustic feature amount pattern extracted from acoustic data including the water flowing sound in a sewer pipe during no-rainfall time that does not include the water flowing sound of unknown water, and an acoustic feature amount pattern extracted from acoustic data including the sound of flowing water including unknown water. Unknown-water prediction section 120 inputs, into the learned unknown-water detection model, an acoustic feature amount pattern extracted from acoustic data of the water flowing sound collected in a target sewer pipe for prediction, and obtains an output result indicating the presence or absence of unknown water.

FIG. 11 is a flowchart illustrating a learning process for the unknown-water detection model implemented by the neural network according to one example of the present invention. The learning process is typically performed by a computation apparatus other than unknown-water detection apparatus 100, but the performer is not limited to this, and the leaning process may also be performed by unknown-water detection apparatus 100. The below-described example will be described under an assumption that the learning process is performed by any computation apparatus having the same hardware configuration illustrated in FIG. 2 as unknown-water detection apparatus 100. The unknown-water detection model obtained by the learning process is made available to unknown-water detection apparatus 100, and is utilized for the unknown-water prediction process of unknown-water prediction section 120 described above.

As illustrated in FIG. 11, the computation apparatus inputs training acoustic feature amount patterns into a target neural network for learning at step S301. The acoustic feature amount pattern extracted from acoustic data including the water flowing sound in a sewer pipe during no rainfall time that does not include the water flowing sound of unknown water and the acoustic feature amount pattern extracted from acoustic data including the sound of flowing water including unknown water are utilized as the training acoustic feature amount patterns.

At step S302, the computation apparatus compares a prediction value on the presence or absence of unknown water outputted from the neural network with labels (i.e., "including unknown water" or "not including unknown water") of the inputted acoustic feature amount pattern.

At step S303, the computation apparatus updates a parameter(s) of the neural network based on the result of the comparison. For example, the update of the parameter may be performed by back propagation or the like.

At step S304, the computation apparatus determines whether an end condition has been satisfied. When the end condition has been satisfied (S304: YES), the learning process is ended and the ultimately obtained neural network is considered as the learned unknown-water detection model. On the other hand, when the end condition has not been satisfied (S304: NO), the computation apparatus repeats steps S301 to S303. Here, the end condition may be that a predetermined number of training data pieces have been processed, for example.

Note that, although the acoustic feature amount patterns are inputted into the unknown-water detection model according to the present example, the unknown-water detection model according to the present invention is not limited to this example, and chronological data of a predetermined period (e.g., one day, one week, or the like) such as an acoustic waveform of acoustic data, one or more feature amounts extracted from acoustic data, or the like may be inputted into the unknown-water detection model.

[Identification of Location of Occurrence of Unknown Water]

In one example, unknown-water prediction section 120 may narrow down the location of occurrence of unknown water based on acoustic data obtained at a plurality of locations. Specifically, when obtaining acoustic data from a plurality of sound collection locations (manholes), unknown-water prediction section 120 predicts the presence or absence of unknown water from acoustic feature amount patterns extracted from the respective acoustic data. For example, when unknown-water detection apparatus 100 obtains K pieces of acoustic data $D_i$ (where "i" denotes a position index and $1 \leq i \leq K$), unknown-water prediction section 120 performs the unknown-water prediction process described above, and obtains prediction result $J_i$ ($J_i = 0/1$, and, $J_i = 0$ when unknown water does not exist and $J_i = 1$ when unknown water exists) for each of the sound collection locations. That is, when $J_i = 1$, unknown-water prediction section 120 predicts that unknown water occurs in the vicinity of the sound collection location corresponding to position index i.

That is, unknown-water detection apparatus 100 described above, together with one or more sound collection apparatuses, may form an unknown-water detection system. Specifically, in such an unknown-water detection system, unknown-water detection apparatus 100 may collect acoustic data including the water flowing sound from each sound collection apparatus via a communication line(s) using one or both of radio and wire, extract an acoustic feature amount pattern from the respective acoustic data collected, and perform prediction on the presence or absence of unknown water for each of the extracted acoustic feature amount patterns by utilizing the learned unknown-water detection model as described above, for example.

[Experimental Result]

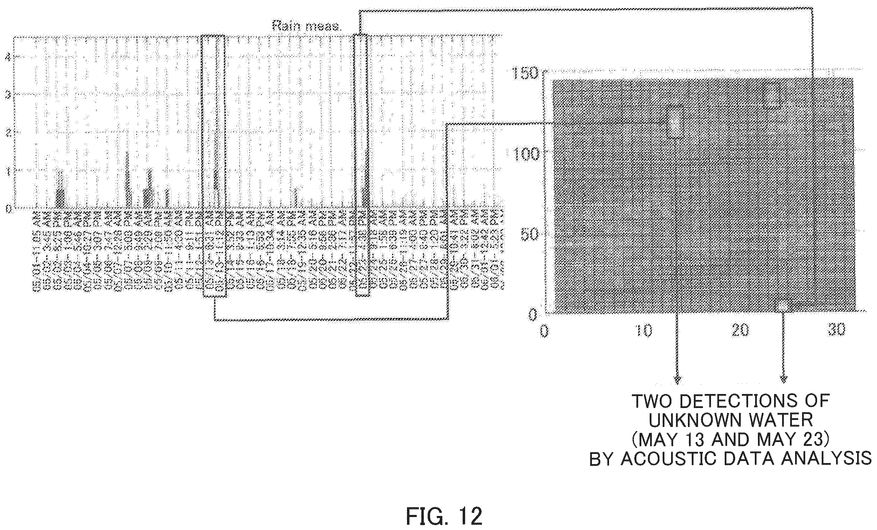

FIG. 12 illustrates an unknown-water prediction result by unknown-water detection apparatus 100 according to one example of the present invention. The graph on the left side of FIG. 12 represents the amount of rainfall in a certain area for one month from May 1 to May 31, and the graph on the right side illustrates an unknown-water prediction result by unknown-water detection apparatus 100. Note that, it was known in advance that, within the area, unknown water would occur during rainfall in a sewer pipe chosen as a prediction target this time. Acoustic data including the sound of flowing water flowing through the target sewer pipe that had been collected over a period of one month from May 1 to May 31 was provided to unknown-water detection apparatus 100. As is understood from the illustrated graph indicating the prediction result, the unknown water corresponding to rainfall on May 13 and 24 was detected in the sewer pipe after a time lag.

While the examples of the present invention have been described in detail above, the present invention is not limited to the specific embodiments described above, and various modifications and changes can be made within the scope of the gist of the present invention described in the appended claims.

Reference Signs List

    100 Unknown-water detection apparatus
    110 Feature amount extraction section
    120 Unknown-water prediction section

**Claims**

1. An unknown-water detection apparatus (100), wherein unknown water is rainwater or groundwater that flows into a wastewater pipeline, comprising:

a processor (101), a memory (102),
a feature amount extraction section (110) that extracts, from acoustic data including a water flowing sound, an acoustic feature amount pattern indicating a temporal change in an acoustic feature amount; and
an unknown-water prediction section (120) that predicts presence or absence of unknown water from an acoustic feature amount pattern of target acoustic data for prediction by utilizing a machine learning model that learned an acoustic feature amount pattern extracted from data including one or both of acoustic data including a water flowing sound during no-rainfall time and acoustic data of a water flowing sound under a condition different from the no-rainfall time, wherein
the acoustic feature amount pattern indicates a temporal change in the acoustic feature amount with respect to day of week and time slot, **characterized in that** the acoustic data under the condition different from the no-rainfall time is at least one of acoustic data during rainfall time, acoustic data of a water flowing sound when another flowing water from outside is introduced into flowing water during no-rainfall time, and acoustic data of a water flowing sound due to groundwater or storm surge.

2. The unknown-water detection apparatus according to claim 1, wherein

the machine learning model uses a subspace to characterize an acoustic feature amount pattern of the acoustic data including the water flowing sound during the no-rainfall time, and
the unknown-water prediction section predicts the presence or absence of the unknown water based on a score of anomaly degree indicating a deviation from the subspace composed of the acoustic feature amount pattern of the acoustic data including the water flowing sound during the no-rainfall time.

3. The unknown-water detection apparatus according to claim 1, wherein

the machine learning model is a neural network that learned the acoustic feature amount pattern extracted from the data including the acoustic data during the no-rainfall time and the acoustic data under the condition different from the no-rainfall time, and
the unknown-water prediction section inputs the acoustic feature amount pattern of the target acoustic data for prediction into the neural network and predicts the presence or absence of the unknown water as an output from the neural network.

4. The unknown-water detection apparatus according to any one of claims 1 to 3, wherein the unknown-water prediction section narrows down a location of occurrence of the unknown water based on acoustic data obtained at a plurality of locations.

5. The unknown-water detection apparatus according to any one of claims 1 to 4, wherein the acoustic data is obtained via a communication line.

6. An unknown-water detection method, wherein unknown water is rainwater or groundwater that flows into a wastewater pipeline,
comprising the steps of

extracting, by a processor (101), an acoustic feature amount pattern from acoustic data including a water flowing sound, the acoustic feature amount pattern indicating a temporal change in an acoustic feature amount; and
predicting, by the processor, presence or absence of unknown water from an acoustic feature amount pattern of target acoustic data for prediction by utilizing a machine learning model that learned an acoustic feature amount pattern extracted from data including one or both of acoustic data including a water flowing sound during no-rainfall time and acoustic data of a water flowing sound under a condition different from the no-rainfall time, wherein
the acoustic feature amount pattern indicates a temporal change in the acoustic feature amount with respect to day of week and time slot, **characterized in that** the acoustic data under the condition different from the no-rainfall time is at least one of acoustic data during rainfall time, acoustic data of a water flowing sound when another flowing water from outside is introduced into flowing water during no-rainfall time, and acoustic data of a water flowing sound due to groundwater or storm surge.

7. The unknown-water detection method according to claim 6, wherein

the machine learning model uses a subspace to characterize an acoustic feature amount pattern of the acoustic data including the water flowing sound during the no-rainfall time, and
the predicting step predicts the presence or absence of the unknown water based on a score of anomaly degree indicating a deviation from the subspace composed of the acoustic feature amount pattern of the acoustic data including the water flowing sound during the no-rainfall time.

8. The unknown-water detection method according to claim 6, wherein

the machine learning model is a neural network that learned the acoustic feature amount pattern extracted from the data including the acoustic data during the no-rainfall time and the acoustic data under the condition different from the no-rainfall time, and
the predicting step inputs the acoustic feature amount pattern of the target acoustic data for prediction into the neural network and predicts the presence or absence of the unknown water as an output from the neural network.

9. The unknown-water detection method according to any one of claims 6 to 8, wherein the predicting step narrows down a location of occurrence of the unknown water based on acoustic data obtained at a plurality of locations.

10. The unknown-water detection method according to any one of claims 6 to 9, wherein the acoustic data is obtained via a communication line.

11. A program causing a computer to execute the steps of the unknown-water detection method according to any one of claims 6 to 10.

12. An unknown-water detection system according to any one of claims 1 to 5, further comprising:
one or more sound collection apparatuses.


**Patentansprüche**

1. Vorrichtung (100) zur Detektion von unbekanntem Wasser, wobei unbekanntes Wasser Regenwasser oder Grundwasser ist, das in eine Abwasserleitung fließt, umfassend: einen Prozessor (101), einen Speicher (102),

einen Merkmalsmengenextraktionsabschnitt (110), der aus akustischen Daten, die ein Geräusch fließenden Wassers einschließen, ein akustisches Merkmalsmengenmuster extrahiert, das eine zeitliche Änderung einer akustischen Merkmalsmenge anzeigt; und
einen Abschnitt (120) zur Vorhersage von unbekanntem Wasser, der das Vorhandensein oder Nichtvorhandensein von unbekanntem Wasser aus einem akustischen Merkmalsmengenmuster von akustischen Zieldaten zur Vorhersage durch Verwenden eines maschinellen Lernmodells vorhersagt, das ein akustisches Merkmalsmengenmuster erlernt hat, das aus Daten extrahiert wurde, die eines oder beide von akustischen Daten, die ein Geräusch fließenden Wassers während einer regenfreien Zeit einschließen, und akustischen Daten eines Geräuschs fließenden Wassers unter einer sich von der regenfreien Zeit unterscheidenden Bedingung einschließen, wobei
das akustische Merkmalsmengenmuster eine zeitliche Änderung der akustischen Merkmalsmenge in Bezug auf einen Wochentag und ein Zeitfenster anzeigt, **dadurch gekennzeichnet, dass** die akustischen Daten unter der sich von der regenfreien Zeit unterscheidenden Bedingung zumindest akustische Daten während einer Regenzeit, akustische Daten eines Geräuschs fließenden Wassers, wenn anderes fließendes Wasser von außen in fließendes Wasser während einer regenfreien Zeit eingeführt wird, und akustische Daten eines Geräuschs fließenden Wassers aufgrund von Grundwasser oder Sturmflut sind.

2. Vorrichtung zur Detektion von unbekanntem Wasser nach Anspruch 1, wobei

das maschinelle Lernmodell einen Unterraum verwendet, um ein akustisches Merkmalsmengenmuster der akustischen Daten zu charakterisieren, die das Geräusch fließenden Wassers während der regenfreien Zeit einschließen, und
der Abschnitt zur Vorhersage von unbekanntem Wasser das Vorhandensein oder Nichtvorhandensein des unbekannten Wassers basierend auf einem Punktewert eines Anomaliegrads vorhersagt, der eine Abweichung vom Unterraum anzeigt, der aus dem akustischen Merkmalsmengenmuster der akustischen Daten besteht, die das Geräusch fließenden Wassers während der regenfreien Zeit einschließen.

**3.** Vorrichtung zur Detektion von unbekanntem Wasser nach Anspruch 1, wobei

das maschinelle Lernmodell ein neuronales Netzwerk ist, das das akustische Merkmalsmengenmuster erlernt hat, das aus den Daten extrahiert wurde, die die akustischen Daten während der regenfreien Zeit und die akustischen Daten unter der sich von der regenfreien Zeit unterscheidenden Bedingung einschließen, und der Abschnitt zur Vorhersage von unbekanntem Wasser das akustische Merkmalsmengenmuster der akustischen Zieldaten zur Vorhersage in das neuronale Netzwerk eingibt und das Vorhandensein oder Nichtvorhandensein des unbekannten Wassers als eine Ausgabe aus dem neuronalen Netzwerk vorhersagt.

**4.** Vorrichtung zur Detektion von unbekanntem Wasser nach einem der Ansprüche 1 bis 3, wobei der Abschnitt zur Vorhersage von unbekanntem Wasser einen Ort des Auftretens des unbekannten Wassers basierend auf akustischen Daten eingrenzt, die an einer Vielzahl von Orten erhalten werden.

**5.** Vorrichtung zur Detektion von unbekanntem Wasser nach einem der Ansprüche 1 bis 4, wobei die akustischen Daten über eine Kommunikationsleitung erhalten werden.

**6.** Verfahren zur Detektion von unbekanntem Wasser, wobei unbekanntes Wasser Regenwasser oder Grundwasser ist, das in eine Abwasserleitung fließt, umfassend die Schritte:

Extrahieren eines akustischen Merkmalsmengenmusters aus akustischen Daten, die ein Geräusch fließenden Wassers einschließen, durch einen Prozessor (101), wobei das akustische Merkmalsmengenmuster eine zeitliche Änderung einer akustischen Merkmalsmenge anzeigt; und
Vorhersagen des Vorhandenseins oder Nichtvorhandenseins von unbekanntem Wasser durch den Prozessor aus einem akustischen Merkmalsmengenmuster von akustischen Zieldaten zur Vorhersage durch Verwenden eines Maschinenlernmodells, das ein akustisches Merkmalsmengenmuster erlernt hat, das aus Daten extrahiert wurde, die eines oder beide von akustischen Daten, die ein Geräusch fließenden Wassers während einer regenfreien Zeit einschließen, und akustischen Daten eines Geräuschs fließenden Wassers unter einer sich von der regenfreien Zeit unterscheidenden Bedingung einschließen, wobei das akustische Merkmalsmengenmuster eine zeitliche Änderung der akustischen Merkmalsmenge in Bezug auf einen Wochentag und ein Zeitfenster anzeigt, **dadurch gekennzeichnet, dass** die akustischen Daten unter der sich von der regenfreien Zeit unterscheidenden Bedingung zumindest akustische Daten während einer Regenzeit, akustische Daten eines Geräuschs fließenden Wassers, wenn anderes fließendes Wasser von außen in fließendes Wasser während einer regenfreien Zeit eingeführt wird, und akustische Daten eines Geräuschs fließenden Wassers aufgrund von Grundwasser oder Sturmflut sind.

**7.** Verfahren zur Detektion von unbekanntem Wasser nach Anspruch 6, wobei

das maschinelle Lernmodell einen Unterraum verwendet, um ein akustisches Merkmalsmengenmuster der akustischen Daten zu charakterisieren, die das Geräusch fließenden Wassers während der regenfreien Zeit einschließen, und
der Vorhersageabschnitt das Vorhandensein oder Nichtvorhandensein des unbekannten Wassers basierend auf einem Punktewert eines Anomaliegrads vorhersagt, der eine Abweichung vom Unterraum anzeigt, der aus dem akustischen Merkmalsmengenmuster der akustischen Daten besteht, die das Geräusch fließenden Wassers während der regenfreien Zeit einschließen.

**8.** Verfahren zur Detektion von unbekanntem Wasser nach Anspruch 6, wobei

das maschinelle Lernmodell ein neuronales Netzwerk ist, das das akustische Merkmalsmengenmuster erlernt hat, das aus den Daten extrahiert wurde, die die akustischen Daten während der regenfreien Zeit und die akustischen Daten unter der sich von der regenfreien Zeit unterscheidenden Bedingung einschließen, und
der Vorhersageschritt das akustische Merkmalsmengenmuster der akustischen Zieldaten zur Vorhersage in das neuronale Netzwerk eingibt und das Vorhandensein oder Nichtvorhandensein des unbekannten Wassers als eine Ausgabe aus dem neuronalen Netzwerk vorhersagt.

**9.** Verfahren zur Detektion von unbekanntem Wasser nach einem der Ansprüche 6 bis 8, wobei der Vorhersageschritt einen Ort des Auftretens des unbekannten Wassers basierend auf akustischen Daten eingrenzt, die an einer Vielzahl von Orten erhalten werden.

**10.** Verfahren zur Detektion von unbekanntem Wasser nach einem der Ansprüche 6 bis 9, wobei die akustischen Daten über eine Kommunikationsleitung erhalten werden.

**11.** Programm, das einen Computer zum Ausführen der Schritte des Verfahrens zur Detektion von unbekanntem Wasser nach einem der Ansprüche 6 bis 10 veranlasst.

**12.** System zur Detektion von unbekanntem Wasser nach einem der Ansprüche 1 bis 5, ferner einschließend: eine oder mehrere Schallerfassungsvorrichtungen.

**Revendications**

**1.** Appareil de détection d'eau inconnue (100), dans lequel l'eau inconnue est de l'eau de pluie ou des eaux souterraines qui s'écoule(nt) dans une canalisation d'eaux usées, comprenant : un processeur (101), une mémoire (102),

une section d'extraction de quantité de caractéristiques (110) qui extrait, à partir de données acoustiques comprenant un son d'écoulement d'eau, un modèle de quantité de caractéristiques acoustiques indiquant un changement temporel d'une quantité de caractéristiques acoustiques ; et
une section de prédiction d'eau inconnue (120) qui prédit la présence ou l'absence d'eau inconnue à partir d'un motif de quantité de caractéristiques acoustiques de données acoustiques cibles pour la prédiction au moyen d'un modèle d'apprentissage automatique qui a appris un motif de quantité de caractéristiques acoustiques extrait de données comprenant les unes ou les deux parmi des données acoustiques comprenant un son d'écoulement d'eau pendant une période sans pluie et des données acoustiques d'un son d'écoulement d'eau dans une condition différente de la période sans pluie,
le motif de quantité de caractéristiques acoustiques indiquant un changement temporel de la quantité de caractéristiques acoustiques par rapport au jour de la semaine et à la tranche de temps, **caractérisé en ce que** les données acoustiques dans la condition différente du temps sans pluie sont au moins les unes parmi des données acoustiques pendant le temps de pluie, des données acoustiques d'un son d'écoulement d'eau lorsqu'une autre eau s'écoulant de l'extérieur est introduite dans l'eau s'écoulant pendant une période sans pluie, et des données acoustiques d'un son d'écoulement d'eau dû à des eaux souterraines ou à une onde de tempête.

**2.** Appareil de détection d'eau inconnue selon la revendication 1, dans lequel

le modèle d'apprentissage automatique utilise un sous-espace pour caractériser un motif de quantité de caractéristiques acoustiques des données acoustiques comprenant le son d'écoulement d'eau pendant le temps sans pluie, et
la section de prédiction d'eau inconnue prédit la présence ou l'absence de l'eau inconnue sur la base d'un score de degré d'anomalie indiquant un écart par rapport au sous-espace composé du motif de quantité de caractéristiques acoustiques des données acoustiques comprenant le son d'écoulement d'eau pendant la période sans pluie.

**3.** Appareil de détection d'eau inconnue selon la revendication 1, dans lequel

le modèle d'apprentissage automatique est un réseau de neurones artificiels qui a appris le motif de quantité de caractéristiques acoustiques extrait des données comprenant les données acoustiques pendant le temps sans pluie et les données acoustiques dans la condition différente du temps sans pluie, et
la section de prédiction d'eau inconnue entre le motif de quantité de caractéristiques acoustiques des données acoustiques cibles pour la prédiction dans le réseau de neurones artificiels et prédit la présence ou l'absence de l'eau inconnue comme sortie du réseau de neurones artificiels.

**4.** Appareil de détection d'eau inconnue selon l'une quelconque des revendications 1 à 3, dans lequel la section de prédiction d'eau inconnue rétrécit un emplacement de survenue de l'eau inconnue sur la base de données acoustiques obtenues à une pluralité d'emplacements.

**5.** Appareil de détection d'eau inconnue selon l'une quelconque des revendications 1 à 4, dans lequel les données acoustiques sont obtenues par l'intermédiaire d'une ligne de communication.

**6.** Procédé de détection d'eau inconnue, dans lequel l'eau inconnue est de l'eau de pluie ou des eaux souterraines qui s'écoule(nt) dans une canalisation d'eaux usées, comprenant les étapes consistant à :

extraire, par un processeur (101), un motif de quantité de caractéristiques acoustiques à partir de données acoustiques comprenant un son d'écoulement d'eau, le motif de quantité de caractéristiques acoustiques indiquant un changement temporel dans une quantité de caractéristiques acoustiques ; et

prédire, par le processeur, la présence ou l'absence d'eau inconnue à partir d'un motif de quantité de caractéristiques acoustiques de données acoustiques cibles pour la prédiction au moyen d'un modèle d'apprentissage automatique qui a appris un motif de quantité de caractéristiques acoustiques extrait de données comprenant les unes ou les deux parmi des données acoustiques comprenant une eau un son d'écoulement d'eau pendant une période sans pluie et des données acoustiques d'un son d'écoulement d'eau dans une condition différente de la période sans pluie,

le motif de quantité de caractéristiques acoustiques indiquant un changement temporel de la quantité de caractéristiques acoustiques par rapport au jour de la semaine et à la tranche de temps, **caractérisé en ce que** les données acoustiques dans la condition différente du temps sans pluie sont au moins les unes parmi des données acoustiques pendant le temps de pluie, des données acoustiques d'un son d'écoulement d'eau lorsqu'une autre eau s'écoulant de l'extérieur est introduite dans l'eau s'écoulant pendant une période sans pluie, et des données acoustiques d'un son d'écoulement d'eau dû à des eaux souterraines ou à une onde de tempête.

7. Procédé de détection d'eau inconnue selon la revendication 6, dans lequel

le modèle d'apprentissage automatique utilise un sous-espace pour caractériser un motif de quantité de caractéristiques acoustiques des données acoustiques comprenant le son d'écoulement d'eau pendant le temps sans pluie, et

l'étape de prédiction prédit la présence ou l'absence de l'eau inconnue sur la base d'un score de degré d'anomalie indiquant un écart par rapport au sous-espace composé du motif de quantité de caractéristiques acoustiques des données acoustiques comprenant le son d'écoulement d'eau pendant le temps sans pluie.

8. Procédé de détection d'eau inconnue selon la revendication 6, dans lequel

le modèle d'apprentissage automatique est un réseau de neurones artificiels qui a appris le motif de quantité de caractéristiques acoustiques extrait des données comprenant les données acoustiques pendant le temps sans pluie et les données acoustiques dans la condition différente du temps sans pluie, et

l'étape de prédiction entre le motif de quantité de caractéristiques acoustiques des données acoustiques cibles pour la prédiction dans le réseau de neurones artificiels et prédit la présence ou l'absence de l'eau inconnue comme sortie du réseau de neurones artificiels.

9. Procédé de détection d'eau inconnue selon l'une quelconque des revendications 6 à 8, dans lequel l'étape de prédiction rétrécit un emplacement de survenue de l'eau inconnue sur la base de données acoustiques obtenues à une pluralité d'emplacements.

10. Procédé de détection d'eau inconnue selon l'une quelconque des revendications 6 à 9, dans lequel les données acoustiques sont obtenues par l'intermédiaire d'une ligne de communication.

11. Programme amenant un ordinateur à exécuter les étapes du procédé de détection d'eau inconnue selon l'une quelconque des revendications 6 à 10.

12. Dispositif de détection d'eau inconnue selon l'une quelconque des revendications 1 à 5, comprenant en outre : un ou plusieurs appareils de collecte de son.

ACOUSTIC DATA
REPRESENTING WATER
FLOWING SOUND
OBTAINED BY SOUND
COLLECTION APPARATUS
INSTALLED IN MANHOLE

⟶

┌─────────────────────────────────┐
│ ⌐100                            │
│  UNKNOWN-WATER                   │
│  DETECTION APPARATUS             │
│                                  │
│                                  │
│  UNKNOWN-WATER                   │
│  DETECTION                       │
│  MODEL                           │
│                                  │
└─────────────────────────────────┘

⟶

PREDICTION RESULT ON
PRESENCE OR ABSENCE
OF UNKNOWN WATER

FIG. 1

FIG. 2

FIG. 3

1ST WEEK

M-TH WEEK

FEATURE
AMOUNT
$1 \sim D$

■ ■ ■ ■ ■ ■

FEATURE
AMOUNT
$1 \sim D$

TIME

TIME

DAY OF WEEK

DAY OF WEEK

$f_{d,t} = [f_{[w_1,d,t]}, \cdots \cdots, f_{[w_M,d,t]}]$, WHERE $w_M$ d, AND t ARE INDEXES OF NUMBER OF WEEKS, DAY OF WEEK, AND TIME, RESPECTIVELY, AND $f \in R^{D \times 1}$, $d \in [1,7]$, and $t \in [0,24]$ HOLD.

FIG. 4

START

S101

PREPROCESS ACOUSTIC DATA

S102

EXTRACT FEATURE AMOUNT FROM
PREPROCESSED ACOUSTIC DATA

S103

EXTRACT ACOUSTIC FEATURE AMOUNT PATTERN
FROM EXTRACTED FEATURE AMOUNT

S104

UTILIZE MACHINE LEARNING MODEL TO PREDICT PRESENCE
OR ABSENCE OF UNKNOWN WATER
FROM ACOUSTIC FEATURE AMOUNT PATTERN

END

FIG. 5

FIG. 6A

FIG. 6B

water usage pattern(fusion)

FIG. 7A

FIG. 7B

UNKNOWN-WATER
DETECTION EXAMPLE

TIME

STRENGTH
OF
SUSPICION

DAY OF WEEK
(ONE WEEK)

TIME SLOT IN WHICH
UNKNOWN WATER IS
SUSPECTED

FIG. 8

STATISTICAL ANOMALY DETECTION
COMPUTE SCORE OF ANOMALY DEGREE

SUBSPACE METHOD FOR DETECTION
OF ANOMALOUS WATER SOUND
「(affine) subspace method」

x ACOUSTIC FEATURE
AMOUNT INPUT

$d(x, S_{sa}(U, \mu))$ SCORE OF
ANOMALY DEGREE

$S_{sa}(U, \mu)$

SUBSPACE OF ACOUSTIC PATTERN
OF NORMALLY USED WATER

FIG. 9

EP 3 767 556 B1

START

S201

COMPUTE DEVIATION BETWEEN SUBSPACE CHARACTERIZING
ACOUSTIC FEATURE AMOUNT PATTERN OF
NORMALLY USED WATER AND
TARGET FEATURE AMOUNT VECTOR FOR PREDICTION

S202

DETECT PRESENCE OR ABSENCE OF UNKNOWN
WATER BASED ON COMPARISON BETWEEN
DEVIATION AND PREDETERMINED THRESHOLD

END

FIG. 10

START

INPUT TRAINING ACOUSTIC FEATURE AMOUNT
PATTERN INTO NEURAL NETWORK

S301

COMPARE OUTPUTTED PREDICTION VALUE WITH LABEL
OF INPUTTED ACOUSTIC FEATURE AMOUNT PATTERN

S302

UPDATE PARAMETER OF NEURAL NETWORK
BASED ON RESULT OF COMPARISON

S303

IS END CONDITION
SATISFIED?

S304

NO

YES

END

FIG. 11

TWO DETECTIONS OF
UNKNOWN WATER
(MAY 13 AND MAY 23)
BY ACOUSTIC DATA ANALYSIS

FIG. 12

EP 3 767 556 B1

**EP 3 767 556 B1**

## REFERENCES CITED IN THE DESCRIPTION

### Patent documents cited in the description

- JP 2011080347 A

- JP 2002285634 A